# EUROPEAN PATENT APPLICATION

(11) **EP 4 597 933 A1**
(43) Date of publication of application: **06.08.2025**
(21) Application number: 23886230.4
(22) Date of filing: 31.10.2023
(51) Int. Cl.: H04L 12/14, H04L 41/14, H04W 8/22

(54) **METHOD AND DEVICE FOR APPLYING BILLING FOR TERMINAL ANALYSIS DATA COLLECTION AND PROVISION IN WIRELESS COMMUNICATION SYSTEM**

(30) Priority: 31.10.2022 KR 20220142383
(71) Applicant: Samsung Electronics Co., Ltd., Suwon-si, Gyeonggi-do 16677 (KR)
(72) Inventor: PARK, Jungshin, Suwon-si, Gyeonggi-do 16677 (KR); SUH, Dongeun, Suwon-si, Gyeonggi-do 16677 (KR)
(74) Representative: Gulde & Partner
(86) International application number: PCT/KR2023/017169
(87) International publication number: WO 2024/096534

(57) **Abstract**

The disclosure relates to a 5G or 6G communication system for supporting a higher data transmission rate. The present disclosure presents a method for managing billing for transmission of related data when collecting state and analysis data from a terminal in a mobile communication system or providing state and analysis data to a terminal, and the present disclosure may be applied for cases such when a telecommunication operator intends to collect user and network data or utilize same by providing same to a terminal for the purpose of improving terminal and network performance, etc.

## Description

### [Technical Field]

The present invention relates to a wireless communication system, and more particularly, to a method and device for applying charging when providing or collecting data or analysis results to a UE in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, when the wireless communication system provides network status and analytics information requested by a UE to improve the performance of applications of the UE or collects status data of the UE, the need for a method for applying charging for transmission and use of the network status and the analytics information has emerged.

### [Disclosure]

### [Technical Problem]

The present invention provides a method for charging for transmission and use of network status and analytics information requested by a UE when a wireless communication system provides the network status and the analytics information to improve performance of applications of the UE.

In addition, another object of the present invention provides a method for charging for transmission and use of status information or analysis results even when a wireless communication system intends to collect the status information or analysis results from a UE.

### [Technical Solution]

In order to solve the above problems, a method of a terminal in a wireless communication system, the method comprising determining to request assistance data for improving performance of an application, transmitting a message requesting the assistance data to a network data analytics function (NWDAF) entity according to the determination, the message including at least a data collection application function (DCAF) address; and receiving the assistance data from the NWDAF entity via a DCAF entity determined based on the DCAF address.

A method of a network data analytics function (NWDAF) entity in a wireless communication system according to another embodiment of the present disclosure may include receiving a message requesting assistance data in case that a terminal determines to request the assistance data for improving performance of an application, the message including at least a data collection application function (DCAF) address, generating the assistance data based on a request from the terminal and transmitting the assistance data via a DCAF entity determined based on the DCAF address.

A terminal in a wireless communication system, the terminal comprising a transceiver, and a controller configured to determine to request assistance data for improving performance of an application, transmit, via the transceiver, a message requesting the assistance data to a network data analytics function (NWDAF) entity according to the determination, the message including at least a data collection application function (DCAF) address, and receive the assistance data from the NWDAF entity via a DCAF entity determined based on the DCAF address.

A network data analytics function (NWDAF) entity in a wireless communication system according to still yet another embodiment of the present disclosure may include a transceiver, and a controller configured to receive a message requesting assistance data through the transceiver in case that a terminal determine to request the assistance data for improving performance of an application, the message including at least a data collection application function (DCAF) address, generate the assistance data based on a request from the terminal, and transmit the assistance data through the transceiver, via a DCAF entity determined based on the DCAF address.

### [Effect of the Invention]

According to an embodiment of the present invention, when a wireless communication system provides network status and analytics information requested by a UE to improve performance of applications of the UE, it is possible to efficiently transmit the network status and the analytics information and apply charging for the efficient use of the network status and the analytics information.

In addition, according to another embodiment of the present invention, even when the wireless communication system intends to collect the status information or analysis results from the UE, it is possible to transmit the status information or analysis results and apply charging for the efficient use of the network status and the analytics information.

### [Description of Drawings]

FIG. 1 illustrates a structure of a wireless communication system according to an embodiment of the present invention.
FIG. 2 illustrates a general operation for collecting data from a UE in the wireless communication system according to an embodiment of the present disclosure.
FIG. 3 illustrates a signaling procedure of the wireless communication system for configuring charging information in a process of collecting the data from the UE according to an embodiment of the present invention.
FIG. 4 illustrates a signaling procedure of a wireless communication system for configuring charging information in a process of collecting data from a UE according to another embodiment of the present invention.
FIG. 5 illustrates a signaling procedure of a wireless communication system for configuring charging information in a process of providing network status and analytics data to a UE according to an embodiment of the present invention.
FIG. 6 illustrates a signaling procedure of a wireless communication system for configuring charging information in a process of providing network status and analytics data to a UE according to another embodiment of the present invention.
FIG. 7 illustrates a signaling procedure of a wireless communication system for configuring charging information in a process of providing network status and analytics data to a UE according to another embodiment of the present invention.
FIG. 8 is a block diagram illustrating components of a terminal according to an embodiment of the present invention.
FIG. 9 is a block diagram illustrating components of a network entity according to an embodiment of the present invention.

### [Mode for Disclosure]

Hereinafter, embodiments of the present disclosure will be described in detail with reference to the accompanying drawings. Further, when it is determined that the detailed description of the known art related to the present invention may obscure the gist of the present invention, the detailed description thereof will be omitted. Further, the following terminologies are defined in consideration of the functions in the present invention and may be construed in different ways by the intention or practice of users and operators. Therefore, the definitions thereof should be construed based on the contents throughout the specification.

Various advantages and features of the present invention and methods accomplishing the same will become apparent from the following detailed description of embodiments with reference to the accompanying drawings. However, the present disclosure is not limited to exemplary embodiments to be described below, but may be implemented in various different forms, these exemplary embodiments will be provided only in order to make the present disclosure complete and allow those skilled in the art to completely recognize the scope of the present disclosure, and the present disclosure will be defined by the scope of the claims. Throughout the specification, the same components will be denoted by the same reference numerals.

The present disclosure relates to a method and device for supporting various services in a wireless communication system. Specifically, the present disclosure describes a technology for supporting performance improvement of split computing by managing a request for communication session information received from a UE and an application server that use the split computing in a wireless communication system and providing necessary status information.

In the following description, terms for identifying connection nodes, terms referring to network entities or network functions (NFs), terms referring to messages, terms referring to interfaces between network entities, terms referring to various types of identification information, etc., are provided for the convenience of description. Accordingly, the present invention is not limited to terms described below, and other terms referring to objects having equivalent technical meanings may be used.

For convenience of description below, the present invention uses terms and names defined in the 3rd generation partnership project long term evolution (3GPP LTE) and 5G standards. However, the present invention is not limited to the above terms and names, and may be equally applied to systems that follow other standards.

For convenience of description below, the names of NFs (e.g., AMF, SMF, NSSF, etc.) are used for targets exchanging information for access control and status management. However, the embodiments of the present invention may be applied equally even when the NFs are actually implemented as instances (which are an AMF instance, an SMF instance, an NSSF instance, etc., respectively).

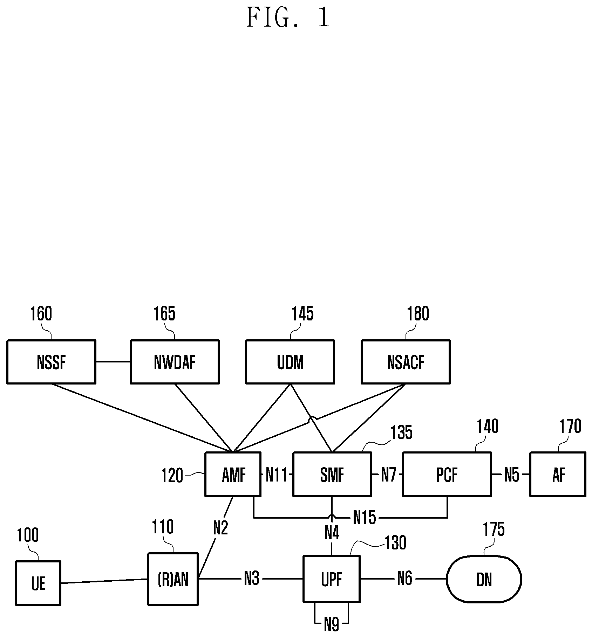

FIG. 1 illustrates a system structure of 5GS according to an embodiment of the present invention. The 5GS may be composed of a 5G core network, a base station, a UE, etc. The 5G core network (or 5GC) may be composed of AMF 120, SMF 135, UPF 130, PCF 140, UDM 145, NSSF 160, NWDAF 165, N3F, etc.

A UE 100 may access the 5G core network through a radio access network base station 110. The access network base station 110 may support a 3GPP access network (e.g., NR, E-UTRA, etc.) or a non-3GPP access network (e.g., WiFi, etc.) type. The UE 100 may be connected to the AMF 120 by an N2 interface and to the UPF 130 by an N3 interface through the base station 110. In addition to the base station, the base station 110 may be referred to as an 'access point (AP)', 'eNodeB (eNB)', '5th generation node (5G node)', 'gNodeB (gNB)', or other terms having a technical meaning equivalent thereto. A non-3GPP function (N3F) is a network function (NF) that operates as N2 interface and N3 interface terminations for the UE 100 accessed through a non-3GPP access network (e.g., WiFi, etc.) not defined by the 3GPP. The N3F may process N2 control plane signaling and N3 user plane packets.

The access and mobility management function (AMF) 120 is the network function (NF) that manages wireless network access and mobility for the UE. The session management function (SMF) 135 is an NF that manages sessions for the UE, and session information includes QoS information, charging information, and information on packet processing. The user plane function (UPF) 130 is an NF that processes user traffic (user plane traffic) and is controlled by the SMF 135. The policy control function (PCF) 140 is an NF that manages operator policy for providing services in the wireless communication system. The user data management (UDM) 145 is an NF that stores and manages subscriber information of the UE (UE subscription). Unified data repository (UDR) (not illustrated) is an NF that stores and manages data. The UDR may store the UE subscription information, and provide the UE subscription information to the UDM. In addition, the UDR may store operator policy information and provide operator policy information to the PCF. The network data analytics function (NWDAF) 165 is an NF that provides analytics information for the operation of the 5G system. The NWDAF 165 may collect data from other NFs or operations, administration and maintenance (OAM) constituting the 5G system, analyze the collected data, and provide the analysis results to other NFs. The network slice admission control function (NSACF) 180 is an NF that monitors and controls the number of registered UEs and sessions of a network slice that is a target of network slice admission control (NSAC). The NSACF 180 stores configuration information on the maximum number of registered UEs and the maximum number of sessions for each network slice.

Hereinafter, for convenience of description, targets exchanging information for access control and status management will be collectively described as the NF. However, the embodiments disclosed in the present invention may be applied equally even when the NFs are actually implemented as instances (which are the AMF instance, the SMF instance, the NSSF instance, etc., respectively).

In the present disclosure, the instance may refer to a state in which a specific NF exists in the form of software code, and the instance is executable by being allocated physical or/and logical resources from a computing system in order to perform the function of the NF in a physical computing system such as a specific computing system existing on a core network. Accordingly, the AMF instance, the SMF instance, and the NSSF instance each may refer to a state in which they may be used by being allocated physical or/and logical resources from the specific computing system existing on the core network to perform the AMF, SMF, and NSSF operations. As a result, the existing physical AMF, SMF, and NSSF entities and the AMF instance, the SMF instance, and the NSSF instance that may be allocated and used the physical or/and logical resources from the specific computing system existing on the network to perform the AMF, SMF, NSSF operations may perform the same operation. Therefore, in the embodiment of the present invention, matters described as the NF (AMF, SMF, UPF, NSSF, NRF, SCP, etc.) may be replaced with an NF instance, or conversely, matters described as the NF instance may be replaced with the NF and applied. Similarly, matters described as a network slice in the embodiment of the present invention may be replaced with a network slice instance, or conversely, matters described as the network slice instance may be replaced with the network slice and applied.

According to an embodiment of the present disclosure, in the 5G system defined by the 3GPP, one network slice may be referred to as single-network slice selection assistance information (S-NSSAI). The S-NSSAI may be composed of a slice/service type (SST) value and a slice differentiator (SD) value. The SST may indicate characteristics of services (e.g., eMBB, IoT, URLLC, V2X, etc.) supported by the slice. The SD may be a value used as an additional identifier for a specific service referred to as SST.

The NSSAI may be composed of one or more S-NSSAIs. Examples of the NSSAI may include configured NSSAI stored in the UE, requested NSSAI requested by the UE, allowed NSSAI decided by the NF of the 5G core network (e.g., AMF, NSSF, etc.) that the UE is allowed to use, subscribed NSSAI to which the UE is subscribed, etc., but are not limited to the above examples.

The UE 100 may be simultaneously connected to the access network and registered in the 5G system. Specifically, the UE 100 may access the base station 110 to perform a UE registration procedure with the AMF 120. During the registration procedure, the AMF 120 may decide the allowed slice (allowed NSSAI) available to the UE accessing the base station 110 and allocate the decided allowed slice to the UE 100. The UE may select a specific slice and configure a PDU session for communication with an actual application server. One PDU session may include one or more quality of service (QoS) flows, and each QoS flow may provide different transmission performance required for each application service by configuring different QoS parameters.

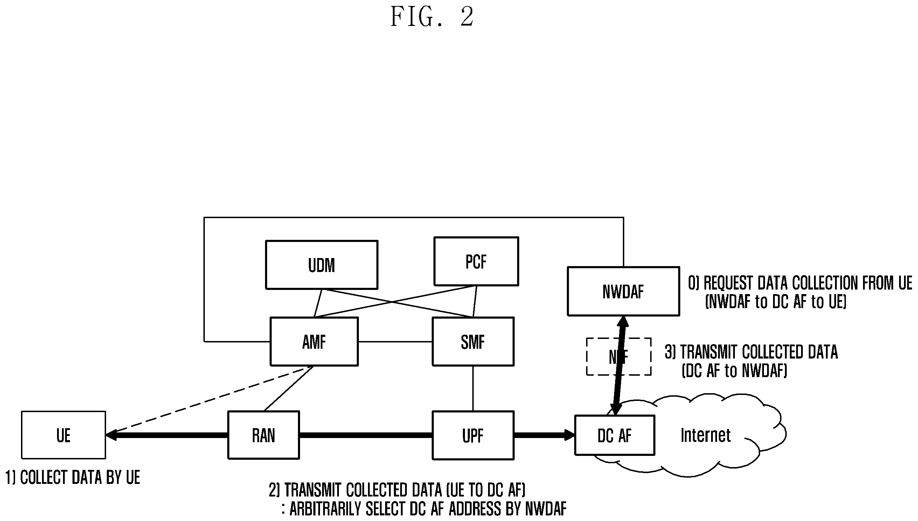

FIG. 2 illustrates a general operation for collecting data from the UE in the wireless communication system according to an embodiment of the present disclosure.

In step 0, when it is determined that data needs to be collected from the UE in the wireless communication system, the NWDAF may select any data collection application function (DCAF) designated for the data collection and request the data collection from the UE. In this case, the DCAF may be selected by the NWDAF in consideration of a location of the UE, a type of information to be collected, a network load, etc. The request may be sent from the NWDAF to the DCAF. The DCAF may send NWDAF request contents to the UE using an application signaling message.

In step 1, the UE may perform the data collection requested by a mobile communication system.

In step 2, the UE may transmit the collected data to the DCAF. For example, the UE may transmit the collected data to the designated DCAF via the UPF of a transmission path of a user plane.

In step 3, the DCAF may transmit the data collected by the UE, which is received from the UE, to the NWDAF. In this case, when there is no trust relationship between the NWDAF and the DCAF, data may be transmitted via NEF. The NWDAF may analyze the data collected from the UE that has received the data, and perform additional operations to improve the performance of the UE and the network by utilizing the analysis results. In the above process, the DCAF may be arbitrarily selected by the NWDAF in consideration of several conditions related to the UE, and thus, an address of the DCAF collected and transmitted by the UE may be changed. Therefore, the charging method that may be applied when transmitting the collected data in consideration of the change in the address of the DCAF is required.

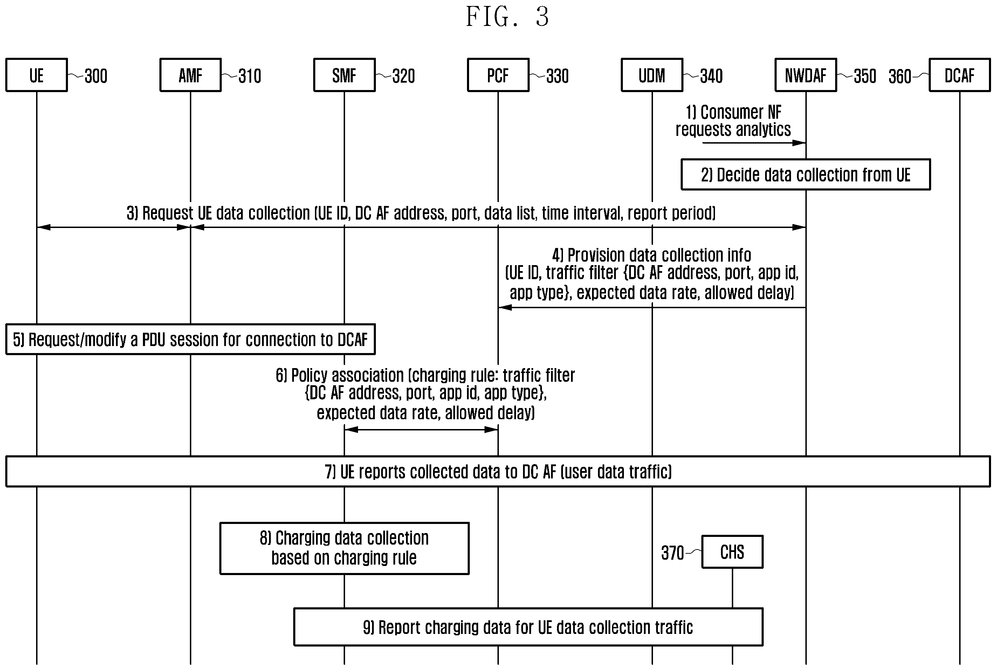

FIG. 3 illustrates a signaling procedure of the wireless communication system for configuring the charging information in the process of collecting the data from the UE according to an embodiment of the present invention.

In step 1, a network function requiring analytics data in the network of the mobile communication system may be a consumer NF of NWDAF 350, and the consumer NF may request data analysis for a user UE from the NWDAF 350.

In step 2, the NWDAF 350, which has received the analysis request, may perform a data collection request process of collecting data required for analysis from the NFs on the network for the analysis requested by the consumer NF. Specifically, the NWDAF 350 may decide whether data needs to be collected from the UE.

In step 3, the NWDAF 350 may transmit the message requesting the data collection from the UE 300 through the AMF 310 (depending on the implementation, it is also possible to use the SMF 320). The message requesting the data collection may include information such as a UE identifier (UE ID), an IP address (or Ethernet address) and TCP (or UDP) port information of a DCAF 360 to be used when transmitting the data collected by the UE, a list of data to be collected, a collection time interval, and a report period. In this case, the NWDAF 350 may select an appropriate DCAF 360 in consideration of a current location of the UE 300, the network load, the type and period of the data to be collected, etc. Accordingly, the information on the selected DCAF 360 may be included in the data collection request message.

In step 4, the NWDAF 350 may transmit a provision data collection info message, which includes information on the DCAF 360 designated by the NWDAF to receive the data collected by the UE in step 3, to the PCF 330 so that the PCF 330 may use the information on the DCAF 360 to establish a charging policy for the data transmission of the UE. The message may include the UE identifier (UE ID) designated for the data collection, information on a traffic filter for transmitting the collected data to the DCAF, traffic characteristic information, etc. The traffic filter information may include an IP address (or Ethernet address) and TCP (or UDP) port information of the DCAF 360 to be used when transmitting the data collected by the UE, an application identifier (ID), an application type, etc. In addition, the traffic characteristic information may include information on an expected data rate, an allowed delay, etc. When a specific UE designated by the UE identifier generates traffic mapped to the traffic filter from the received information, the PCF 330 may establish the charging policy to collect separate charging data for the corresponding traffic.

In step 5, the UE 300 may perform a process of collecting data according to the data collection request in step 3 and establishing a data transmission path to be used to transmit the data to the DCAF 360. The UE 300 may perform a PDU session modification procedure with the SMF 320 to create a new PDU session to be used for transmitting the collected data to establish the data transmission path or to request a new QoS flow to be used for transmitting the collected data for the existing PDU session. The PDU session creation request message or the PDU session modification request message may include the IP address (or Ethernet address) and the TCP (or UDP) port information of the DCAF 360, etc., to be used when transmitting the data collected by the UE 300 received in step 3 as the traffic filter information to be applied to the new QoS flow for which the creation is requested.

In step 6, the SMF 320 may perform a process of configuring the new QoS flow to be used for transmitting the data collected by the UE 300 to the DCAF 360 by creating a new PDU session or modifying the existing PDU session according to the request of the UE 300. The SMF 320 may request, from the PCF 330, a service quality policy and a charging rule to be applied to the QoS flow for configuring the QoS flow. The message requesting the service quality policy and the charging rule may include the traffic filter information, the UE identifier, etc., received through the session creation or the modification request message of the UE 300 in step 5. The PCF 330, which has received the UE identifier, the traffic filter information, etc., from the SMF 320, may identify that the traffic filter information is mapped to the traffic filter received from the NWDAF in step 4, and transmit the service quality policy and the charging rule established in step 4 to the SMF 320 in response to the message requesting the service quality policy and the charging rule of the SMF 320. The charging rule included in the response message may include, as the traffic filter information for selecting traffic to which charging is to be applied, the IP address (or Ethernet address) and the TCP (or UDP) port information of the DCAF 360 to be used when transmitting the data collected by the UE 300, the application identifier, the application type, etc, and include, as the service quality policy, information such as a maximum allowable transmission rate and maximum allowable delay based on the expected data transmission rate. The SMF 320 may transmit the charging rule received from the PCF 330 to the UPF (not illustrated) to request the UPF to detect the traffic where the UE 300 transmits the collected data to the DCAF 360 and to use the detected traffic to measure the transmission volume.

In step 7, the UE 300 may transmit the collected data to the DCAF 360 designated in step 3 through the PDU session and the QoS flow configured in step 5. The DCAF 360 may transmit the received data to the NWDAF 350. The NWDAF 350 may apply the data collected from the UE 300 to produce the analysis result requested by the consumer NF.

In step 8, the SMF 320 may collect, from the UPF (not illustrated), the charging data (total transmission time, total transmission data size, etc.) measured from the UPF (not illustrated) by applying the charging rule configured by the PCF 330 in step 6.

In step 9, the SMF 320 may transmit the collected charging data to a charging server (CHS) 370 designated by the PCF 330. The charging server 370 may apply separate charging to the traffic used by the UE 300 to transmit the collected data to the network based on the charging data.

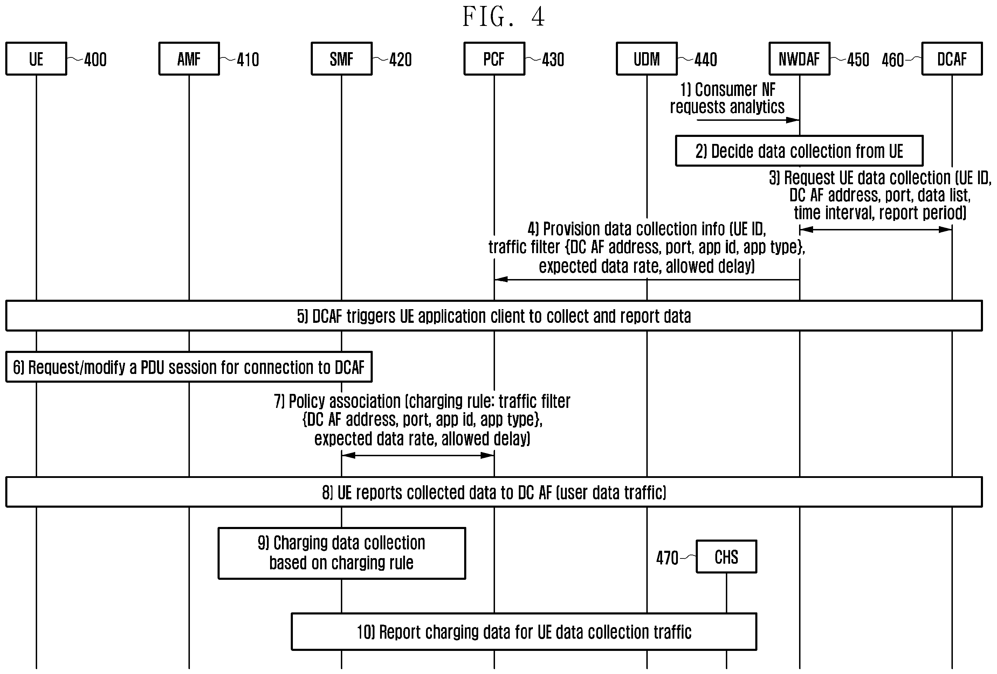

FIG. 4 illustrates a signaling procedure of a wireless communication system for configuring charging information in a process of collecting data from a UE according to another embodiment of the present invention.

In step 1, a network function requiring analytics data in the network of the mobile communication system may be a consumer NF of NWDAF 450, and the consumer NF may request data analysis for a user UE from the NWDAF 450.

In step 2, the NWDAF 450, which has received the analysis request, may perform a data collection request process of collecting data required for analysis from the NFs on the network for the analysis requested by the consumer NF. Specifically, the NWDAF 450 may decide whether data needs to be collected from the UE 400.

In step 3, the NWDAF 450 may transmit a message requesting data collection from the UE to the DCAF 460 to collect data from the UE 400. In this case, the NWDAF 450 may select an appropriate DCAF 460 in consideration of a current location of the UE 400, the network load, the type and period of the data to be collected, etc. The request message may include information such as the UE identifier (UE ID), a list of data to be collected, a collection time interval, and a report period. The DCAF 460, which has received the request message for the data collection of the UE 400 from the NWDAF 450, may finally decide the DCAF 460 to be used in the data collection process of the UE in consideration of the current location of the UE, loads of each DCAF 460, a type and period of data to be collected, etc., and include information on the selected DCAF 460 in a response message to the request of the NWDAF 450. According to an embodiment, the DCAF 460, which has received the request message, may decide another DCAF 460 that is more suitable to be used in the data collection process of the UE 400. For example, the DCAF 460, which has received the request message, may be a default DCAF. The default DCAF may decide an arbitrary DCAF to be used in the data collection process of the UE. For example, the response message transmitted to the NWDAF 450 may include information such as a UE identifier (UE ID), an IP address (or Ethernet address) and TCP (or UDP) port information of the DCAF (finally selected by the DCAF) to be used when transmitting the data collected by the UE 400, a list of data to be collected, a collection time interval, and a report period.

In step 4, the NWDAF 450 may transmit a provision data collection info message, which includes the information on the DCAF 460 received by the NWDAF 450 in step 3, to the PCF 430 so that the PCF 430 may use the information on the DCAF 460 to establish a charging policy for the data transmission of the UE. The message may include the UE identifier (UE ID) designated for the data collection, information on a traffic filter for transmitting the collected data to the DCAF, traffic characteristic information, etc., for the traffic. The traffic filter information may include an IP address (or Ethernet address) and TCP (or UDP) port information of the DCAF 460 to be used when transmitting the data collected by the UE 400, an application identifier (ID), an application type, etc. In addition, the traffic characteristic information may include information on an expected data rate, an allowed delay, etc. When a specific UE designated by the UE identifier generates traffic mapped to the traffic filter from the received information, the PCF 430 may establish the charging policy to collect separate charging data for the corresponding traffic.

In step 5, the DCAF 460 may transmit a message, which requests collection of status data from the UE 400, to an application client of UE 400. The request message may include information such as the IP address (or Ethernet address) and the TCP (or UDP) port information of the DCAF (finally selected by the DCAF) to be used when transmitting the data collected by the UE 400, the list of data to be collected, the collection time interval, and the report period.

In step 6, the UE 400 may perform a process of collecting data according to the data collection request in step 5 and establishing a data transmission path to be used to transmit the data to the DCAF 460. The UE 400 may perform a PDU session modification procedure with the SMF to create a new PDU session to be used for transmitting the collected data to establish the data transmission path or to request a new QoS flow to be used for transmitting the collected data for the existing PDU session. The PDU session creation request message or the PDU session modification request message may include the IP address (or Ethernet address) and the TCP (or UDP) port information of the DCAF 460, etc., to be used when transmitting the data collected by the UE 400 received in step 5 as the traffic filter information to be applied to the new QoS flow for which the creation is requested.

In step 7, the SMF 420 may perform a process of configuring the new QoS flow to be used for transmitting the data collected by the UE 400 to the DCAF 460 by creating a new PDU session or modifying the existing PDU session according to the request of the UE 400. The SMF 420 may request, from the PCF 430, a service quality policy and a charging rule to be applied to the QoS flow for configuring the QoS flow. The message requesting the service quality policy and the charging rule may include the traffic filter information, the UE identifier, etc., received through the session creation or the modification request message of the UE 400 in step 6. The PCF 430, which has received the UE identifier and the traffic filter information, etc., from the SMF 420, may identify that the traffic filter information is mapped to the traffic filter received from the NWDAF 450 in step 4. The PCF 430 may transmit the service quality policy and the charging rule established in step 4 to the SMF 420 in response to the message requesting the service quality policy and the charging rule of the SMF 420. The charging rule included in the response message may include the IP address (or Ethernet address) and the TCP (or UDP) port information of the DCAF to be used when transmitting, as the traffic filter information for selecting the traffic to which the charging is to be applied, the data collected by the UE 400, the application identifier (ID), the application type, etc. In addition, the service quality policy may include information such as a maximum allowable transmission rate and the maximum allowable delay based on the expected data transmission rate. The SMF 420 may transmit the charging rule to the UPF (not illustrated) to request the UPF to detect the traffic where the UE 400 transmits the collected data to the DCAF 460 and to use the detected traffic to measure the transmission volume.

In step 8, the UE 400 may transmit the collected data to the DCAF 460 designated in step 5 through the PDU session and the QoS flow configured in step 6. The DCAF 460 may transmit the received data to the NWDAF 450, and the NWDAF 450 may apply the data collected from the UE 400 to produce the analysis result requested by the consumer NF.

In step 9, the SMF 420 may collect, from the UPF (not illustrated), the charging data (total transmission time, total transmission data size, etc.) measured from the UPF (not illustrated) by applying the charging rule configured by the PCF 430 in step 7.

In step 10, the SMF 420 may transmit the collected charging data to a charging server (CHS) 470 designated by the PCF 430, and the charging server 470 may apply separate charging to the traffic used by the UE 400 to transmit the collected data to the network based on the charging data.

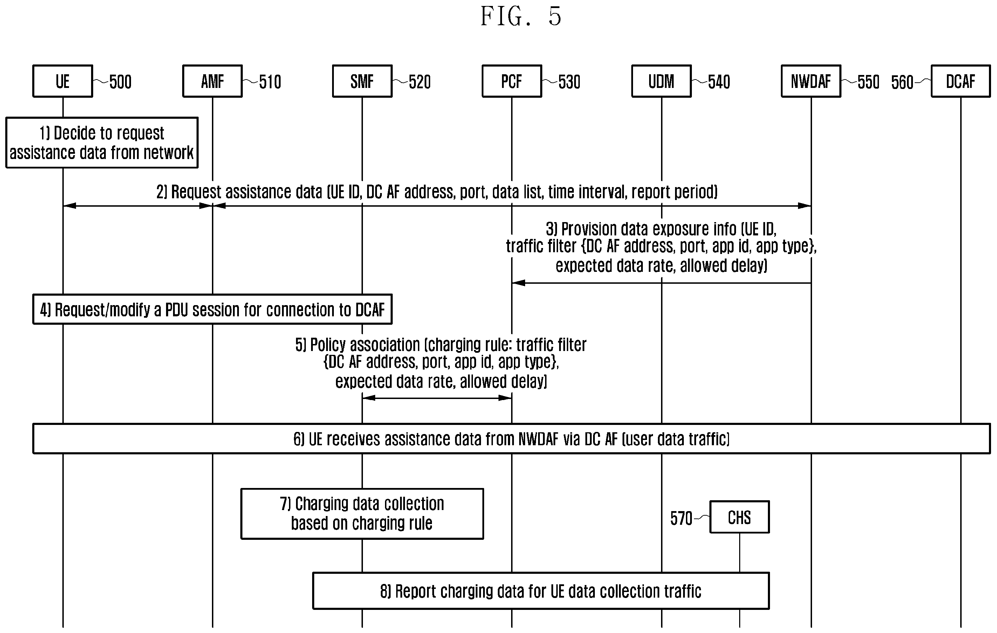

FIG. 5 illustrates a signaling procedure of the wireless communication system for configuring the charging information in a process of providing the network status and the analytics data to the UE according to an embodiment of the present invention.

In step 1, a UE 500 may decide to request network status information and analytics information from the network in order to improve the performance of the application.

In step 2, the UE 500 may transmit a message requesting provision of network status data and analytics data to an NWDAF 550 through an AMF 510 (depending on the implementation, an SMF 520 can also be used). The message requesting the provision of the data may include information such as a UE identifier (UE ID), an IP address (or Ethernet address) and TCP (or UDP) port information of a DCAF 560 to be used when the UE 500 receives data from the network, a list of data to be requested, an analysis time interval, and a report period. In this case, the UE 500 may select an appropriate DCAF 560 based on DCAF selection information provided in advance by the DCAF 560 or a specific application in consideration of its current location, network load, a type and period of data to be collected, etc. In addition, information on the selected DCAF 560 may be included in the data provision request message.

In step 3, the NWDAF 550 may transmit a provision data exposure info message, which includes information on the DCAF 560 designated in the message requesting data provision from the UE 500 in step 2, to the PCF 530 so that the PCF 530 may use the information on the DCAF 560 to establish a charging policy for traffic transmitting network status and analytics data to the UE. The message may include the UE 500 identifier (UE ID) requesting the data provision, traffic filter information for designating traffic transmitting the network status and the analytics information from the DCAF 560 to the UE 500, traffic characteristic information, etc. The traffic filter information may include an IP address (or Ethernet address) and TCP (or UDP) port information of the DCAF 560 to be used when transmitting network status and analytics data to the UE 500, an application identifier (ID), an application type, etc. In addition, the traffic characteristic information may include information on an expected data rate, an allowed delay, etc. When a specific UE designated by the UE identifier transmits and receives traffic mapped to the traffic filter from the received information, the PCF 530 may establish the charging policy to collect separate charging data for the corresponding traffic.

In step 4, the UE 500 may perform a process of establishing a data transmission path to be used for receiving the network status and the analytics data through the DCAF 560 in step 2. The UE 500 may perform a PDU session modification procedure with the SMF 520 to create a new PDU session to be used for receiving the data to establish the data transmission path or to request a new QoS Flow to be used for transmitting the collected data for the existing PDU session. The PDU session creation request message or the PDU session modification request message may include the IP address (or Ethernet address) and the TCP (or UDP) port information of the DCAF 560, etc., transmitted by the UE 500 in step 2 as the traffic filter information to be applied to the new QoS Flow for which the creation is requested.

In step 5, the SMF 520 may perform a process of configuring the new QoS flow to be used for transmitting the network status and the analytics data to the UE by creating a new PDU session or modifying the existing PDU session according to the request of the UE. The SMF 520 may request, from the PCF 530, a service quality policy and a charging rule to be applied to the QoS flow for configuring the QoS flow. The message requesting the service quality policy and the charging rule may include the traffic filter information, the UE identifier, etc., received through the session creation or the modification request message of the UE 500 in step 4. The PCF 530, which has received the UE identifier, the traffic filter information, etc., from the SMF 520, may identify that the traffic filter information is mapped to the traffic filter received from the NWDAF 550 in step 3, and transmit the service quality policy and the charging rule established in step 3 to the SMF 520 in response to the message requesting the service quality policy and the charging rule of the SMF 520. The charging rule included in the response message may include, as the traffic filter information for selecting traffic to which charging is to be applied, the IP address (or Ethernet address) and the TCP (or UDP) port information of the DCAF to be used by the UE 500 to receive the network status and the analytics data, the application identifier, the application type, etc, and include, as the service quality policy, information such as a maximum allowable transmission rate and maximum allowable delay based on the expected data transmission rate. The SMF 520 may transmit the charging rule received from the PCF 530 to the UPF (not illustrated) to request the UPF to detect the traffic where the UE 500 transmits the collected data to the DCAF 560 and to use the detected traffic to measure the transmission volume.

In step 6, the UE 500 may receive the network status and the analytics data (analyzed by the NWDAF, etc.) through the PDU session and the QoS flow configured in step 4 through the DCAF 560 designated in step 2. The NWDAF 550 may transmit the analyzed data to the DCAF 560. The UE 500 may utilize the data received from the DCAF 560 to improve the performance of the application of UE 500.

In step 7, the SMF 520 may collect, from the UPF (not illustrated), the charging data (total transmission time, total transmission data size, etc.) measured from the UPF (not illustrated) by applying the charging rule configured by the PCF 530 in step 5.

In step 8, the SMF 520 may transmit the collected charging data to a charging server (CHS) 570 designated by the PCF 530. The charging server 570 may apply separate charging to the traffic used by the UE 500 to receive the network status and the analytics data based on the charging data.

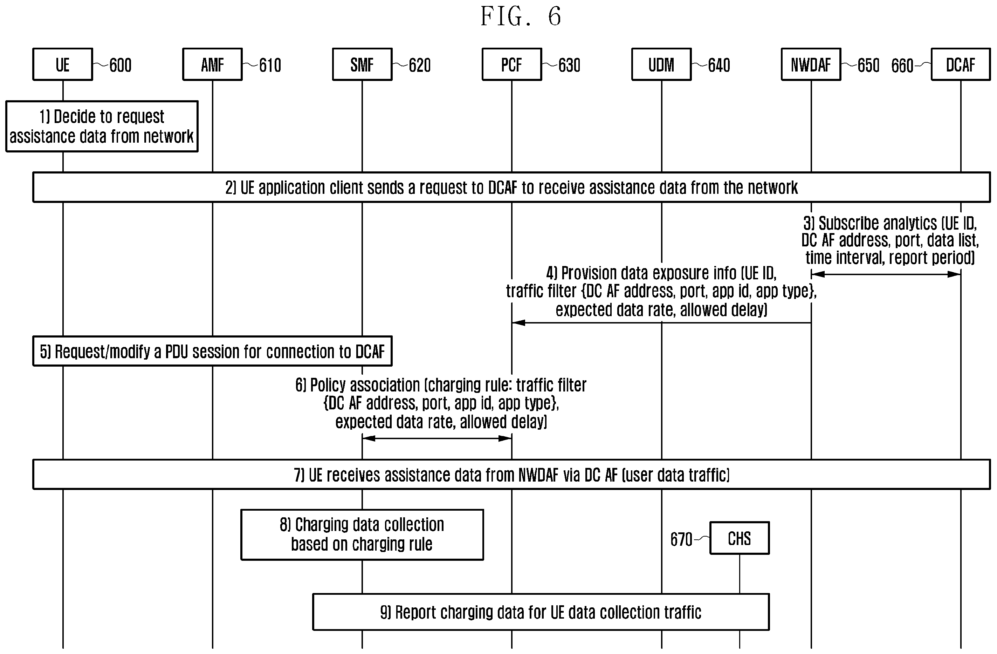

FIG. 6 illustrates a signaling procedure of a wireless communication system for configuring charging information in a process of providing network status and analytics data to a UE according to another embodiment of the present invention.

In step 1, a UE 600 may decide to request network status information and analytics information from the network in order to improve the performance of the application.

In step 2, an application of the UE 600 may transmit a message requesting provision of network status data and analytics data to a DCAF 660. The message requesting the provision of the data may include information such as a UE identifier (UE ID), an IP address (or Ethernet address) and TCP (or UDP) port information of a DCAF 660 to be used when the UE 600 receives data from the network, a list of data to be requested, an analysis time interval, and a report period. In this case, the UE 600 may select an appropriate DCAF 660 based on DCAF selection information provided in advance by the DCAF 660 or a specific application in consideration of its current location, network load, a type and period of data to be collected, etc. In addition, information on the selected DCAF 660 may be included in the data provision request message.

In step 3, the DCAF 660, which has received a message requesting the provision of the network status data and the analytics data from the UE 600, may transmit the message requesting the provision of the network status and the analytics data to the NWDAF 650. Alternatively, the DCAF 660 may directly request network status information from the NF through the NEF (not illustrated), etc. The request message transmitted from the DCAF 660 to the NWDAF 650 may include information such as the IP address (or Ethernet address) and the TCP (or UDP) port information of the DCAF 660, the UE identifier (UE ID) received from the UE in step 2, a list of data to be provided, an analysis time interval, and a report period.

In step 4, the NWDAF 650 may transmit a provision data exposure info message, which includes the information on the DCAF 660 designated by the UE 600 for data provision, received from the DCAF 660 in step 3, to the PCF 630 so that the PCF 630 may use the information on the DCAF 660 to establish a charging policy for traffic transmitting the network status and the analytics data to the UE 600. The message may include the UE identifier (UE ID) requesting the data provision, traffic filter information for designating traffic transmitting the network status and the analytics information from the DCAF 660 to the UE 600, traffic characteristic information, etc. The traffic filter information may include an IP address (or Ethernet address) and TCP (or UDP) port information of the DCAF 660 to be used when transmitting network status and analytics data to the UE 600, an application identifier (ID), an application type, etc. In addition, the traffic characteristic information may include information on an expected data rate, an allowed delay, etc. When a specific UE designated by the UE identifier transmits and receives traffic mapped to the traffic filter from the received information, the PCF 630 may establish the charging policy to collect separate charging data for the corresponding traffic.

In step 5, the UE 600 may perform a process of establishing a data transmission path to be used for receiving the network status and the analytics data through the DCAF 660 designated in step 2. The UE 600 may perform a PDU session modification procedure with the SMF to create a new PDU session to be used for receiving the data to establish the data transmission path or to request a new QoS Flow to be used for transmitting the collected data for the existing PDU session. The PDU session creation request message or the PDU session modification request message may include the IP address (or Ethernet address) and the TCP (or UDP) port information of the DCAF 660, etc., transmitted by the UE 600 in step 2 as the traffic filter information to be applied to the new QoS Flow for which the creation is requested.

In step 6, the SMF 620 may perform a process of configuring the new QoS flow to be used for transmitting the network status and the analytics data to the UE 600 by creating a new PDU session or modifying the existing PDU session according to the request of the UE 600. The SMF 620 may request, from the PCF 630, a service quality policy and a charging rule to be applied to the QoS flow for configuring the QoS flow. The message requesting the service quality policy and the charging rule may include the traffic filter information, the UE identifier, etc., received through the session creation or the modification request message of the UE 600 in step 5. The PCF 630, which has received the UE identifier, the traffic filter information, etc., from the SMF 620, may identify that the traffic filter information is mapped to the traffic filter received from the NWDAF 650 in step 4, and transmit the service quality policy and the charging rule established in step 4 to the SMF 620 in response to the message requesting the service quality policy and the charging rule of the SMF 620. The charging rule included in the response message may include, as the traffic filter information for selecting traffic to which charging is to be applied, the IP address (or Ethernet address) and the TCP (or UDP) port information of the DCAF 660 to be used by the UE to receive the network status and the analytics data, the application identifier (ID), the application type, etc, and include, as the service quality policy, information such as a maximum allowable transmission rate and maximum allowable delay based on the expected data transmission rate. The SMF 620 may transmit the charging rule received from the PCF 630 to the UPF (not illustrated) to request the UPF to detect the traffic where the UE 600 transmits the collected data to the DCAF 660 and to use the detected traffic to measure the transmission volume.

In step 7, the UE 600 may receive the network status and the analytics data (analyzed by the NWDAF, etc.) through the PDU session and the QoS flow configured in step 5 through the DCAF 660 designated in step 2. The NWDAF 650 may transmit the analyzed data to the DCAF 660, and the UE 600 may utilize the data received from the DCAF 660 to improve the performance of the application of the UE.

In step 8, the SMF 620 may collect, from the UPF (not illustrated), the charging data (total transmission time, total transmission data size, etc.) measured from the UPF (not illustrated) by applying the charging rule configured by the PCF 630 in step 5.

In step 9, the SMF 620 may transmit the collected charging data to a charging server (CHS) 670 designated by the PCF 630. The charging server 670 may apply separate charging to the traffic used by the UE to receive the network status and the analytics data based on the charging data.

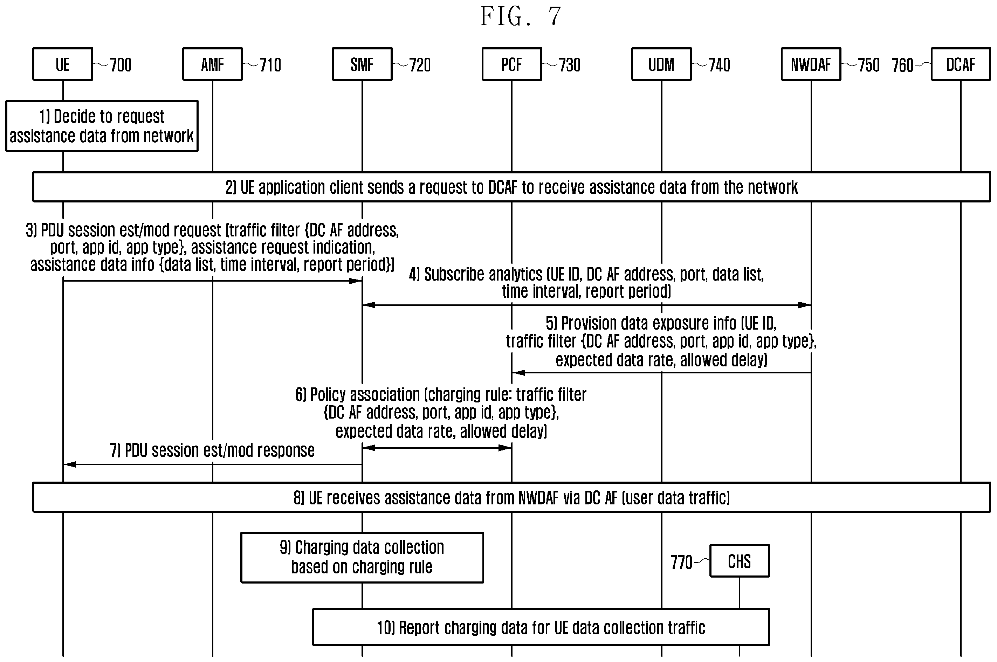

FIG. 7 illustrates a signaling procedure of a wireless communication system for configuring charging information in a process of providing network status and analytics data to a UE according to another embodiment of the present invention.

In step 1, a UE 700 may decide to request network status information and analytics information from the network in order to improve the performance of the application.

In step 2, an application of the UE 700 may transmit a message requesting provision of network status data and analytics data to a DCAF 760. The message requesting the provision of the data may include information such as a UE identifier (UE ID), an IP address (or Ethernet address) and TCP (or UDP) port information of a DCAF 760 to be used when the UE 700 receives data from the network, a list of data to be requested, an analysis time interval, and a report period. In this case, the UE 700 may select an appropriate DCAF 760 based on DCAF selection information provided in advance by the DCAF 760 or a specific application in consideration of its current location, network load, a type and period of data to be collected, etc. In addition, information on the selected DCAF 760 may be included in the data provision request message.

Alternatively, the DCAF 760 may directly request network status information from the NF through the NEF (not illustrated), etc. The request message transmitted from the DCAF 760 to the NWDAF 750 may include information such as the IP address (or Ethernet address) and the TCP (or UDP) port information of the DCAF 760, the UE identifier (UE ID) received from the UE 700 in step 2, a list of data to be provided, an analysis time interval, and a report period.

In step 3, the UE 700 may perform a process of establishing a data transmission path to be used for receiving the network status and the analytics data through the DCAF 760 designated in step 2. The UE 700 may perform a PDU session modification procedure with the SMF to create a new PDU session to be used for receiving the data to establish the data transmission path or to request a new QoS Flow to be used for transmitting the collected data for the existing PDU session. The PDU session creation request message or the PDU session modification request message may include an IP address (or Ethernet address) and TCP (or UDP) port information of the DCAF, etc., transmitted by the UE 700 in step 2 as the traffic filter information to be applied to the new QoS flow for which the creation is requested. In addition, the information such as the list of the network status and the analytics data requested by the UE 700, the analysis time interval, and the report period may be included.

In step 4, the SMF 720 may transmit the network status and analytics data information and the DCAF information requested by the UE 700 to the NWDAF 750. The message may include an IP address (or Ethernet address) and TCP (or UDP) port information of the DCAF 760 received from the UE, and information such as a list of network status and analytics data requested by the UE 700, an analysis time interval, and a report period.

In step 5, the NWDAF 750 may transmit a provision data exposure info message, which includes the information on the DCAF 760 designated by the UE 700 to be used for data provision, received from the SMF 720 in step 4, to the PCF 730 so that the PCF 730 may use the information on the DCAF 760 to establish a charging policy for traffic transmitting the network status and the analytics data to the UE 700. The message may include the UE identifier requesting the data provision, traffic filter information for designating traffic transmitting the network status and the analytics information from the DCAF 760 to the UE 700, traffic characteristic information, etc. The traffic filter information may include an IP address (or Ethernet address) and TCP (or UDP) port information of the DCAF 760 to be used when transmitting network status and analytics data to the UE 700, an application identifier (ID), an application type, etc. In addition, the traffic characteristic information may include information on an expected data rate, an allowed delay, etc. When a specific UE designated by the UE identifier transmits and receives traffic mapped to the traffic filter from the received information, the PCF 730 may establish the charging policy to collect separate charging data for the corresponding traffic.

In step 6, the SMF 720 may perform a process of configuring the new QoS flow to be used for transmitting the network status and the analytics data to the UE 700 by creating a new PDU session or modifying the existing PDU session according to the session creation or modification request of the UE 700 received in step 3. The SMF 720 may request, from the PCF 730, a service quality policy and a charging rule to be applied to the QoS flow for configuring the QoS flow. The message requesting the service quality policy and the charging rule may include the traffic filter information, the UE identifier, etc., received through the session creation or the modification request message of the UE 700 in step 3. The PCF 730, which has received the UE identifier, the traffic filter information, etc., from the SMF 720, may identify that the traffic filter information is mapped to the traffic filter received from the NWDAF 750 in step 5, and transmit the service quality policy and the charging rule established in step 5 to the SMF 720 in response to the message requesting the service quality policy and the charging rule of the SMF 720. The charging rule included in the response message may include, as the traffic filter information for selecting traffic to which charging is to be applied, the IP address (or Ethernet address) and the TCP (or UDP) port information of the DCAF 760 to be used by the UE 700 to receive the network status and the analytics data, the application identifier (ID), the application type, etc, and include, as the service quality policy, information such as a maximum allowable transmission rate and maximum allowable delay based on the expected data transmission rate. The SMF 720 may transmit the charging rule received from the PCF 730 to the UPF (not illustrated) to request the UPF to detect the traffic where the UE 700 transmits the collected data to the DCAF 760 and to use the detected traffic to measure the transmission volume.

In step 7, the SMF 720 may transmit a response message to the UE 700 notifying that a new QoS flow has been created through the creation or modification of the PDU session requested by the UE 700.

In step 8, the UE 700 may receive the network status and the analytics data (analyzed by the NWDAF, etc.) through the PDU session and the QoS flow configured in step 3-7 through the DCAF 760 designated in step 2. The NWDAF 750 may transmit the analyzed data to the DCAF 760. The UE 700 may utilize the data received from the DCAF 760 to improve the performance of the application of UE 700.

In step 9, the SMF 720 may collect, from the UPF (not illustrated), the charging data (total transmission time, total transmission data size, etc.) measured from the UPF (not illustrated) by applying the charging rule configured by the PCF 730 in step 5.

In step 10, the SMF 720 may transmit the collected charging data to a charging server (CHS) 770 designated by the PCF 730. The charging server 700 may apply separate charging to the traffic used by the UE to receive the network status and the analytics data based on the charging data.

By various disclosures as described above, the present invention relates to a method for allowing charging information to be configured in advance from a step of accepting a request for collecting or providing LTE-related status and analytics information.

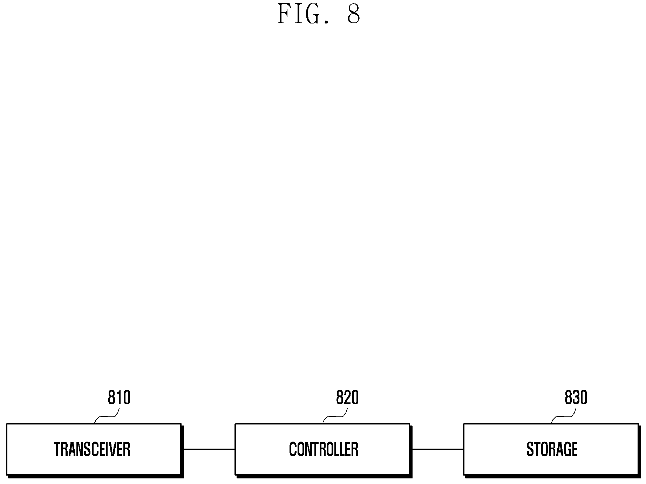

Meanwhile, FIG. 8 is a diagram illustrating a structure of a terminal according to an embodiment of the present invention.

Referring to FIG. 8, the terminal may include a transceiver 810, a controller 820, and storage 830. In the present invention, the controller may be defined as a circuit or an application-specific integrated circuit or at least one processor.

The transceiver 810 may transmit and receive signals to and from other network entities. The transceiver 810 may, for example, receive a message requesting data collection from a network entity.

The controller 820 may control the overall operation of the terminal according to the embodiment proposed in the present invention. For example, the controller 820 may control a signal flow between each block to perform the operation according to the flowchart described above. Specifically, the controller 820 may control to collect data according to a data collection request according to the embodiment of the present invention and establish a data transmission path to be used to transmit the collected data.

The storage 830 may store at least one of the information transmitted and received through the transceiver 810 and the information generated through the controller 820. For example, the storage 830 may store the collected data.

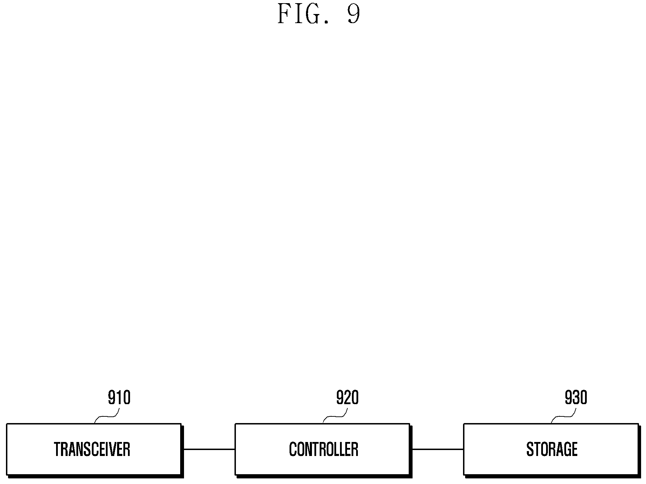

Meanwhile, FIG. 9 is a block diagram illustrating components of the network entity according to an embodiment of the present invention. The network entity may be any network entity for applying charging when providing or collecting data or analysis results to the UE according to an embodiment of the present disclosure. For example, the network entity may be a network data analytics function (NWDAF) entity or a data collection application function (DCAF) entity.

Referring to FIG. 9, the network entity may include a transceiver 910, a controller 920, and storage 930. In the present invention, the controller may be defined as a circuit or an application-specific integrated circuit or at least one processor.

The transceiver 910 may transmit and receive signals to and from other network entities. For example, the transceiver 910 may transmit a message requesting data collection from a UE. Alternatively, the transceiver 910 may receive data collected from the UE.

The controller 920 may control the overall operation of the network entity according to the embodiment proposed in the present invention. For example, the controller 920 may control a signal flow between each block to perform the operation according to the flowchart described above. Specifically, the controller 920 may control to transmit a data collection request according to the embodiment of the present invention and transmit a message including information of another network entity designated for data collection.

The storage 930 may store at least one of the information transmitted and received through the transceiver 910 and the information generated through the controller 920. For example, the storage 930 may store the collected data.

Embodiments of the present invention described in the present specification and shown in the accompanying drawings are only specific examples provided in order to easily describe technical contents of the present invention and assist in the understanding of the present invention, and are not to limit the scope of the present invention. It is obvious to those of ordinary skill in the art to which the present invention pertains that other modifications based on the technical idea of the present invention can be implemented in addition to the embodiments disclosed herein.

## Claims

1. A method of a terminal in a wireless communication system, the method comprising:
determining to request assistance data for improving performance of an application;
transmitting a message requesting the assistance data to a network data analytics function (NWDAF) entity according to the determination, the message including at least a data collection application function (DCAF) address; and
receiving the assistance data from the NWDAF entity via a DCAF entity determined based on the DCAF address.

2. The method of claim 1, wherein the message is transmitted via an access and mobility management function (AMF) entity, and
wherein the message further includes at least one of an identifier of the terminal, port information, information on a requested data list, analysis time interval information, and report period information.

3. The method of claim 1, further comprising:
transmitting a request message for requesting to generate or to modify of a protocol data unit (PDU) session to a session management function (SMF) entity,
wherein the request message for requesting to generate or to modify of the PDU session includes the DCAF address.

4. The method of claim 1, wherein in case that the message for requesting the assistance data including the DCAF address is transmitted to the DCAF entity by an application layer, the message for requesting the assistance data including the DCAF address is transmitted to the NWDAF entity via the DCAF entity.

5. A method of a network data analytics function (NWDAF) entity in a wireless communication system, comprising:
receiving a message requesting assistance data in case that a terminal determines to request the assistance data for improving performance of an application, the message including at least a data collection application function (DCAF) address;
generating the assistance data based on a request from the terminal; and
transmitting the assistance data via a DCAF entity determined based on the DCAF address.

6. The method of claim 5, wherein the message is received via an access and mobility management function (AMF) entity, and
wherein the message further includes at least one of an identifier of the terminal, port information, information on a requested data list, analysis time interval information, and report period information.

7. The method of claim 5, further comprising:
transmitting a provision data exposure information message including the DCAF address to a policy control function (PCF) entity to establish a charging policy for traffic transmitting the assistance data.

8. A terminal in a wireless communication system, the terminal comprising:
a transceiver; and
a controller configured to determine to request assistance data for improving performance of an application,
transmit, via the transceiver, a message requesting the assistance data to a network data analytics function (NWDAF) entity according to the determination, the message including at least a data collection application function (DCAF) address, and
receive the assistance data from the NWDAF entity via a DCAF entity determined based on the DCAF address.

9. The terminal of claim 8, wherein the message is transmitted via an access and mobility management function (AMF) entity, and
wherein the message further includes at least one of an identifier of the terminal, port information, information on a requested data list, analysis time interval information, and report period information.

10. The terminal of claim 8, wherein the controller is further configured to transmit a request message for requesting to generate or to modify of a protocol data unit (PDU) session to a session management function (SMF) entity, and
wherein the request message for requesting to generate or to modify of the PDU session includes the DCAF address.

11. The terminal of claim 8, wherein in case that the message for requesting the assistance data including the DCAF address is transmitted to the DCAF entity by an application layer, the message for requesting the assistance data including the DCAF address is transmitted to the NWDAF entity via the DCAF entity.

12. A network data analytics function (NWDAF) entity in a wireless communication system, comprising:
a transceiver; and
a controller configured to receive a message requesting assistance data through the transceiver in case that a terminal determine to request the assistance data for improving performance of an application, the message including at least a data collection application function (DCAF) address,
generate the assistance data based on a request from the terminal, and
transmit the assistance data through the transceiver, via a DCAF entity determined based on the DCAF address.

13. The NWDAF entity of claim 12, wherein the message is received via an access and mobility management function (AMF) entity, and
wherein the message further includes at least one of an identifier of the terminal, port information, information on a requested data list, analysis time interval information, and report period information.

14. The NWDAF entity of claim 12, wherein the controller is further configured to transmit a provision data exposure information message including the DCAF address to a policy control function (PCF) entity to establish a charging policy for traffic transmitting the assistance data.

15. The NWDAF entity of claim 12, wherein when the message requesting the assistance data including the DCAF address is transmitted to the DCAF entity by an application layer of the UE, the message requesting the assistance data including the DCAF address is received via the DCAF entity.
